# EUROPEAN PATENT SPECIFICATION

(11) **EP 2 772 391 B1**
(45) Date of publication and mention of the grant of the patent: **16.08.2017**
(21) Application number: 14156413.8
(22) Date of filing: 24.02.2014
(51) Int. Cl.: B60Q 1/40

(54) **Turn signal cancelling device for vehicle**
Vorrichtung zur Unterdrückung der Fahrrichtungsanzeige für ein Fahrzeug
Dispositif d'annulation de clignotant pour véhicule

(30) Priority: 27.02.2013 JP 2013036935
(43) Date of publication of application: 03.09.2014
(73) Proprietor: Honda Motor Co., Ltd., Tokyo 107-8556 (JP)
(72) Inventor: Tetsuka, Takashi, Wako-shi, Saitama 351-0193 (JP); Hayashi, Mana, Wako-shi, Saitama 351-0193 (JP)
(74) Representative: Stevens, Jason Paul

(56) References cited:
- EP-A2- 2 332 776
- FR-A1- 2 841 208
- US-A- 4 660 020

## Description

The present invention relates to a turn signal cancelling device for a vehicle, which automatically deactivates a turn signal.

Japanese Patent Laid-Open No. Sho 58-47639 discloses an automatic turn signal cancelling device including: a circuit for determining whether a vehicle is traveling straight ahead or is turning based on a steering angle of the vehicle's handlebars, and outputting a cancelling signal when it is determined that the vehicle is traveling straight ahead; a circuit for outputting a cancelling signal after the passage of a set time after a turn signal is activated; and a circuit for outputting a cancelling signal after the vehicle has travelled a set distance after the turn signal is activated; wherein the automatic turn signal cancelling device cancels the turn signal when receiving the cancelling signal from one of these circuits. Thus, the automatic turn signal cancelling device can cancel a turn signal even in a two-wheeled vehicle in which it is difficult to determine whether the vehicle is traveling straight ahead or is turning.

In the above Japanese Patent Laid-Open No. Sho 58-47639, turn signal cancellation is performed using time and distance. However, turn signals are used in different conditions. For example, the times and travel distances from the activation of a turn signal to the turning off of the turn signal often differ between, for example, cases where turns are made at large and small intersections, and cases where overtaking is performed. It is thus difficult to set times and distances appropriately.

FR2841208 discloses a system for automatic deactivation of vehicle turn-signal indicators after being active for a predetermined distance of time.

Accordingly, it is an object of at least the preferred embodiments of the present invention to provide a turn signal cancelling device for a vehicle which can determine travel conditions using turn signal operation patterns, thereby improving the accuracy of turn signal cancellation.

According to a first aspect of the present invention, there is provided a turn signal cancelling device for a vehicle, the turn signal cancelling device comprising: turn signal cancellation control means for automatically deactivating a turn signal; and vehicle speed detecting means for detecting a vehicle speed; wherein, in a case where an operation for giving an instruction to activate an other of a left turn signal and a right turn signal is performed before a first predetermined time has passed or before the vehicle has travelled a first predetermined distance since an operation for giving an instruction to activate one of the left turn signal and the right turn signal was performed when the vehicle speed is equal to or higher than a predetermined speed, the turn signal cancellation control means automatically deactivates the other of the left turn signal and the right turn signal after a second predetermined time has passed or after the vehicle has travelled a second predetermined distance since the operation for giving the instruction to activate the other of the left turn signal and the right turn signal, wherein the first predetermined time is different from the second predetermined time and wherein the first predetermined distance is different from the second predetermined distance. According to the present invention, an instruction to activate one of the left turn signal and the right turn signal is given when the vehicle speed is equal to or higher than a predetermined speed. In the case where an operation for giving an instruction to activate the other of a left turn signal and a right turn signal is performed before a first predetermined time has passed or before the vehicle has travelled a first predetermined distance, the other of the left turn signal and the right turn signal is automatically deactivated after a second predetermined time has passed or after the vehicle has travelled a second predetermined distance. Thus, turn signal cancellation can be performed at an appropriate time during overtaking, and the accuracy of the turn signal cancellation can be improved.

Preferably, in a case where the operation for giving the instruction to activate the other of the left turn signal and the right turn signal is performed in a state where the vehicle speed is lower than the predetermined speed and the one of the left turn signal and the right turn signal is operating, the turn signal cancellation control means automatically deactivates the other of the left turn signal and the right turn signal after the vehicle has travelled a third predetermined distance since the operation for giving the instruction to activate the other of the left turn signal and the right turn signal.

According to this aspect, when one of the left turn signal and the right turn signal is operating and the vehicle speed is lower than the predetermined speed, the operation for giving the instruction to activate the other of the left turn signal and the right turn signal is performed. The other of the left turn signal and the right turn signal is automatically deactivated after the vehicle has travelled a third predetermined distance since the operation for giving the instruction to activate the other of the left turn signal and the right turn signal. Thus, turn signal cancellation can be performed at an appropriate time after a road shoulder start, and the accuracy of the turn signal cancellation can be improved.

Preferably, in a case where one of the left turn signal and the right turn signal is already operating when an operation of turning on an ignition switch is performed, the turn signal cancellation control means automatically deactivates the one of the left turn signal and the right turn signal after the vehicle has travelled a third predetermined distance since the operation of turning on the ignition switch, and in a case where neither the left turn signal nor the right turn signal is operating when the operation of turning on the ignition switch is performed, the turn signal cancellation control means automatically deactivates one of the left turn signal and the right turn signal after the vehicle has travelled the third predetermined distance since the operation for giving the instruction to activate the one of the left turn signal and the right turn signal. According to the third feature of the present invention, if one of the left turn signal and the right turn signal is already operating when the ignition switch is turned on, the one of the left turn signal and the right turn signal is automatically deactivated after the vehicle has travelled a third predetermined distance from turning on the ignition switch. If neither the left turn signal nor the right turn signal is operating when the ignition switch is turned on, one of the left turn signal and the right turn signal is automatically deactivated after the vehicle has travelled the third predetermined distance since the operation for giving the instruction to activate the one of the left turn signal and the right turn signal. Thus, turn signal cancellation can be performed at an appropriate time after a road shoulder start, and the accuracy of the turn signal cancellation can be improved.

A preferred embodiment of the invention will now be described by way of example only and with reference to the accompanying drawings, in which:
FIG. 1 is a side view of a motorcycle which includes a turn signal cancelling device;
FIG. 2 is a functional block diagram of the turn signal cancelling device;
FIG. 3 is a flowchart of operation of the turn signal cancelling device during overtaking;
FIG. 4 is a flowchart of a first form of operation of the turn signal cancelling device during a road shoulder start; and
FIG. 5 is a flowchart of a second form of operation of the turn signal cancelling device during a road shoulder start.

A preferred embodiment of a turn signal cancelling device for a vehicle will now be described in detail with reference to the accompanying drawings.

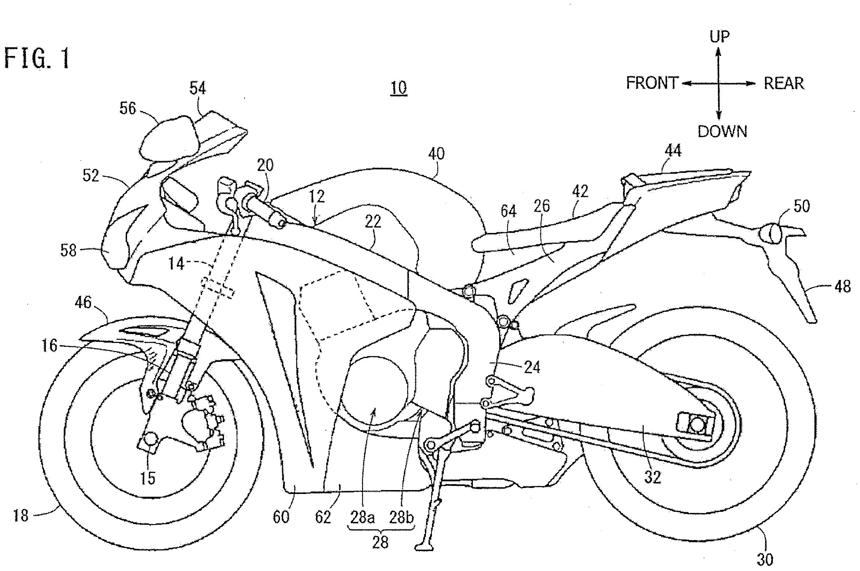

FIG. 1 is a side view of a motorcycle 10 as an example of a vehicle which includes a turn signal cancelling device. Unless indicated to the contrary, the directions "front", "rear", "up" and "down" should be interpreted in accordance with the arrows shown in FIG. 1, and the directions "left" and "right" should be interpreted from the viewpoint of a driver sitting on the motorcycle.

The motorcycle 10 includes: a body frame 12; a head pipe 14 provided at a front end of the body frame 12; left and right front fork members 16 rotatably supported by the head pipe 14; a steerable front wheel 18 rotatably supported by the left and right front fork members 16; and steerable handlebars 20 attached to an upper portion of the left and right front fork members 16.

The body frame 12 includes: left and right main frames 22 extending rearwardly from the head pipe 14; left and right pivot plates 24 provided at the rear of the left and right main frames 22; and left and right seat frames 26 provided on the left and right pivot plates 24 and extending rearwardly and obliquely upwardly therefrom. The left and right main frames 22 are provided with a power unit 28 that generates power. A swing arm 32 that rotatably supports a driven rear wheel 30 is swingably supported by the pivot plates 24. The power unit 28 houses an engine 28a and a transmission 28b within a case of the power unit 28.

A fuel tank 40 for storing fuel is provided on the left and right main frames 22. A driver's seat 42 on which a driver can sit is provided to the rear of the fuel tank 40 and on the left and right seat frames 26. A passenger seat 44 on which a passenger can sit is provided to the rear of the driver seat 42. A front fender 46 is provided on the left and right front fork members 16. A rear fender 48 is provided at a rear portion of the left and right seat frames 26, and supports a rear turn signal 50.

The motorcycle 10 further includes: an upper cowl 52 provided on the body frame 12 to protect its front; a windscreen 54 provided on the upper cowl 52; a rear-view mirror 56 provided at an upper portion of the upper cowl 52 so that the driver can see behind the motorcycle; a headlight 58 provided at a front portion of the upper cowl 52 to shine light forwardly; a middle cowl 60 for protecting a front side portion of the motorcycle 10; an under cover 62 provided at a lower portion of the middle cowl 60 and extending rearwardly therefrom; and a side cover 64 provided on the seat frames 26 to cover a region from an upper portion of the seat frames 26 to a lower portion of the driver seat 42. The rear-view mirror 56 includes a front turn signal.

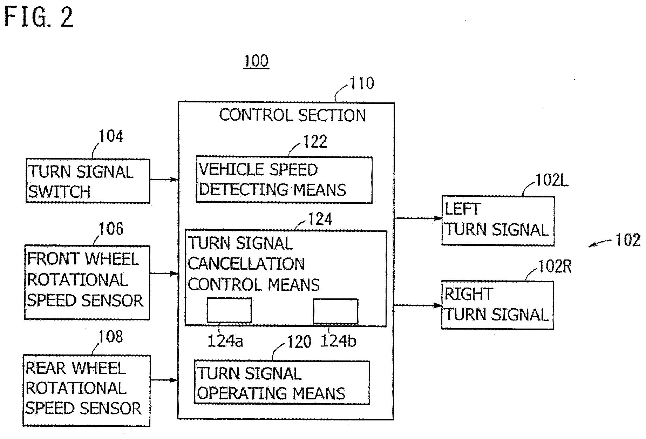

FIG. 2 is a functional block diagram of a turn signal cancelling device 100. The turn signal cancelling device 100 includes a left turn signal 102L, a right turn signal 102R, a turn signal switch (turn signal operating means) 104, a front wheel rotational speed sensor (rotational speed detecting means) 106, a rear wheel rotational speed sensor (rotational speed detecting means) 108, and a control section 110. The left turn signal 102L and the right turn signal 102R may hereinafter be referred to collectively as a turn signal 102.

The left turn signal 102L and the right turn signal 102R are each formed by a front turn signal and a rear turn signal 50. That is, the front turn signal has a left front turn signal and a right front turn signal, and the rear turn signal 50 has a left rear turn signal and a right rear turn signal. The left turn signal 102L is formed by the left front turn signal and the left rear turn signal. The right turn signal 102R is formed by the right front turn signal and the right rear turn signal.

The turn signal switch 104 is a switch provided in the vicinity of the handlebars 20 for turning on (including blinking) one of the left turn signal 102L and the right turn signal 102R. The turn signal switch 104 has a lever which is movable in the left-right direction, and which gives an instruction to turn on the left turn signal 102L or the right turn signal 102R. The turn signal switch 104 outputs an operating signal to the control section 110, which signal corresponds to the operation of the switch by the driver.

The front wheel rotational speed sensor 106 is provided on a shaft around which the front wheel 18 rotates. The front wheel rotational speed sensor 106 detects a rotational speed (rotational frequency) Vrf of the front wheel 18, and outputs the detected rotational speed Vrf to the control section 110. The rear wheel rotational speed sensor 108 is provided on a shaft associated with rotation of the rear wheel 30, such as a countershaft or the like. The rear wheel rotational speed sensor 108 detects a rotational speed (rotational frequency) Vrr of the rear wheel 30, and outputs the detected rotational speed Vrr to the control section 110. The front wheel rotational speed sensor 106 and the rear wheel rotational speed sensor 108 can also be used for other control such as ABS (Anti-lock Brake System) control, TCS (Traction Control System) control, and the like. Incidentally, in a case where the motorcycle 10 is of a motor scooter type, the rear wheel rotational speed sensor 108 may be provided on a gear on the rear wheel 30 side of a centrifugal clutch or the like.

The control section 110 includes turn signal operating means 120, vehicle speed detecting means 122, and turn signal cancellation control means 124. The control section 110 includes at least a computer formed by a CPU or the like (not shown in the Figures) and a memory storing a program and the like. The computer reads the program stored in the memory, and thereby functions as the control section 110 according to the present embodiment.

The turn signal operating means 120 activates and deactivates the left turn signal 102L or the right turn signal 102R according to the operation of the turn signal switch 104. For example, when the driver moves the lever of the turn signal switch 104 to the left to indicate that the vehicle will turn left (a left turn), the turn signal operating means 120 turns on (activates) the left turn signal 102L. Similarly, when the driver moves the lever of the turn signal switch 104 to the right to indicate that the vehicle will turn right (a right turn), the turn signal operating means 120 turns on (activates) the right turn signal 102R. Further, when the lever of the turn signal switch 104 is pressed, the turn signal operating means 120 turns off the left turn signal 102L or the right turn signal 102R.

The vehicle speed detecting means 122 detects the vehicle speed V of the motorcycle 10 using at least one of the rotational speed Vrf of the front wheel 18 (as detected by the front wheel rotational speed sensor 106) and the rotational speed Vrr of the rear wheel 30 (as detected by the rear wheel rotational speed sensor 108).

The turn signal cancellation control means 124 determines travel conditions based on an operation pattern of the turn signal switch 104, and performs turn signal cancellation based on these conditions. Here, "turn signal cancellation" refers to automatically turning off (deactivating) the left turn signal 102L or the right turn signal 102R. The travel conditions include overtaking and a road shoulder start. Various forms of operation of the turn signal cancellation will be described later in detail.

The turn signal cancellation control means 124 includes a timer 124a for counting a time T, and travel distance calculating means 124b for calculating a travel distance L. The travel distance calculating means 124b may calculate the travel distance L by integrating the vehicle speed V detected by the vehicle speed detecting means 122, or may calculate the travel distance L based on the rotational speed Vrf of the front wheel 18 or the rotational speed Vrr of the rear wheel 30.

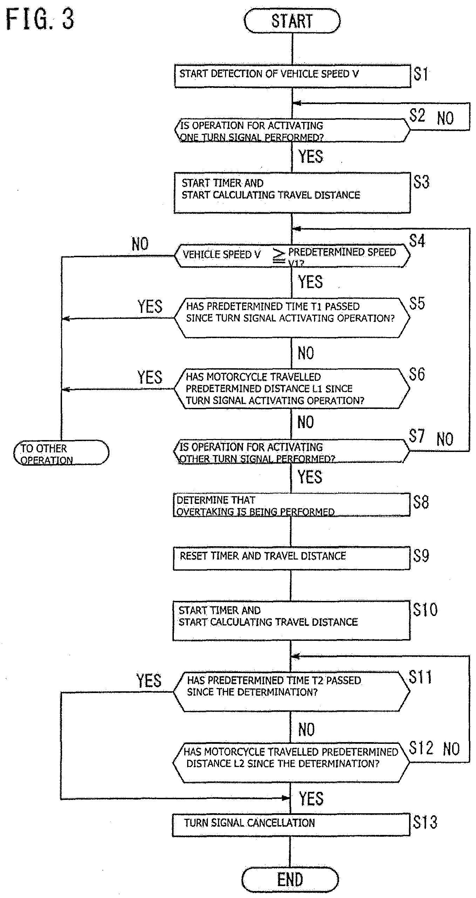

A turn signal cancellation operation carried out by the turn signal cancelling device 100, which operation corresponds to overtaking travel, will now be described with reference to the flowchart in FIG. 3.

First, the vehicle speed detecting means 122 detects the vehicle speed V (step S1). The vehicle speed detecting means 122 detects the vehicle speed V using at least one of the rotational speed Vrf as detected by the front wheel rotational speed sensor 106 and the rotational speed Vrr as detected by the rear wheel rotational speed sensor 108. The front wheel rotational speed sensor 106, the rear wheel rotational speed sensor 108, and the vehicle speed detecting means 122 all perform detection in predetermined cycles.

Next, the turn signal cancellation control means 124 determines whether or not an operation of the turn signal switch 104 for giving an instruction to activate one of the left turn signal 102L and the right turn signal 102R is performed (step S2). If it is determined that operation of the turn signal switch 104 for giving the instruction to activate a turn signal 102 has not been performed, the turn signal cancellation control means 124 remains in step S2 until the operation is performed.

When it is determined in step S2 that the operation for giving the instruction to activate the turn signal 102 has been performed, the turn signal cancellation control means 124 starts the timer 124a, and makes the travel distance calculating means 124b start calculating the travel distance L (step S3).

Further, when the operation of the turn signal switch 104 for giving the instruction to activate the turn signal 102 is performed, the turn signal operating means 120 activates the turn signal 102 according to the operation of the turn signal switch 104. So, for example, when an operation for giving an instruction to activate the right turn signal 102R is performed, the turn signal operating means 120 activates the right turn signal 102R.

Next, the turn signal cancellation control means 124 determines whether or not a latest detected vehicle speed V is equal to or higher than a predetermined speed V1, for example 5 km/h (step S4). When the turn signal cancellation control means 124 determines in step S4 that the vehicle speed V is equal to or higher than the predetermined speed V1, then the turn signal cancellation control means 124 determines whether or not a first predetermined time T1 has passed since the operation of the turn signal switch 104 for giving the instruction to activate the turn signal 102 (step S5). Specifically, the turn signal cancellation control means 124 determines whether or not the time T as counted by the timer 124a is equal to or more than the predetermined time T1.

When it is determined in step S5 that the predetermined time T1 has not passed since the operation of the turn signal switch 104 for giving the instruction to activate the turn signal 102, the turn signal cancellation control means 124 determines whether or not the motorcycle 10 has travelled a first predetermined distance L1 since the operation of the turn signal switch 104 for giving the instruction to activate the one turn signal 102 (step S6). Specifically, the turn signal cancellation control means 124 determines whether or not the travel distance L as calculated by the travel distance calculating means 124b has become equal to or larger than the predetermined distance L1.

When it is determined in step S6 that the motorcycle 10 has not travelled the predetermined distance L1 since the operation of the turn signal switch 104 for giving the instruction to activate the one turn signal 102, the process proceeds to step S7.

Incidentally, one of the operations of step S5 and step S6 may be omitted. For example, when it is determined in step S4 that the vehicle speed V is equal to or higher than the predetermined speed V1, the process proceeds to step S5, and if it is determined in step S5 that the predetermined time T1 has not passed since the operation of the turn signal switch 104, the process may proceed directly to step S7. In addition, when it is determined in step S4 that the vehicle speed V is equal to or higher than the predetermined speed V1, the process may then proceed directly to step S6, and when it is determined in step S6 that the motorcycle 10 has not travelled the predetermined distance L1 since the operation of the turn signal switch 104, the process proceeds to step S7.

After proceeding to step S7, the turn signal cancellation control means 124 determines whether or not an operation of the turn signal switch 104 for giving an instruction to activate the other turn signal 102 is performed (step S7). For example, when an operation of the turn signal switch 104 for giving an instruction to activate the right turn signal 102R is performed in step S2, the turn signal cancellation control means 124 determines in step S7 whether or not an operation of the turn signal switch 104 for giving an instruction to activate the left turn signal 102L is performed.

Incidentally, when the operation of the turn signal switch 104 for giving the instruction to activate the other turn signal 102 is performed, the turn signal operating means 120 deactivates the one turn signal 102, and activates the other turn signal 102. For example, when an operation for giving an instruction to activate the left turn signal 102L is performed while the right turn signal 102R is operating, the turn signal operating means 120 deactivates the right turn signal 102R, and activates the left turn signal 102L.

If it is determined in step S7 that the operation of the turn signal switch 104 for giving the instruction to activate the other turn signal 102 has not been performed, the process returns to step S4 to repeat the above-described operation.

On the other hand, if it is determined in step S7 that the operation of the turn signal switch 104 for giving the instruction to activate the other turn signal 102 has been performed, the turn signal cancellation control means 124 determines that overtaking is being performed (step S8). This is because it can be considered that the turn signal switch 104 is operated for overtaking travel when the vehicle speed V is equal to or higher than the predetermined speed V1, the predetermined time T1 has not passed, and the motorcycle 10 has not travelled the predetermined distance L1 in a period from the operation of the turn signal switch 104 for giving the instruction to activate the one turn signal 102 to the operation of the turn signal switch 104 for giving the instruction to activate the other turn signal 102.

When overtaking (at least in a country that drives on the left such as Japan or the United Kingdom), the motorcycle 10 turns on the right turn signal 102R, then changes lanes to the right, overtakes a vehicle, thereafter turns on the left turn signal 102L, and then changes lanes back to the left. It can therefore be considered that in general, the predetermined time T1 does not elapse or a distance equal to or more than the predetermined distance L1 is not travelled in the period from the operation for giving the instruction to activate the one turn signal 102 to the operation for giving the instruction to activate the other turn signal 102.

A transition is made to another operation if it is determined that the vehicle speed V is not equal to or higher than the predetermined speed V1 (that is, is lower than the predetermined speed V1) (NO in step S4), if it is determined that the predetermined time T1 has passed (YES in step S5), or if it is determined that the motorcycle 10 has travelled the predetermined distance L1 (YES in step S6) in the period from the operation of the turn signal switch 104 for giving the instruction to activate the one turn signal 102 to the operation of the turn signal switch 104 for giving the instruction to activate the other turn signal 102.

That is, in a case where the predetermined time T1 has passed or the motorcycle 10 has travelled the predetermined distance L1 when the vehicle speed V is equal to or higher than the predetermined speed V1, it can be considered that the turn signal switch 104 has been operated for a purpose of changing lanes (lane change) or the like, rather than overtaking. Thus, a transition is made to another operation. In addition, if the vehicle speed V is lower than the predetermined speed V1, then overtaking travel is not performed to begin with. Thus, a transition is also made to another operation in this case.

If is determined in step S8 that overtaking is being performed, the turn signal cancellation control means 124 resets the time T as counted by the timer 124a and the travel distance L as calculated by the travel distance calculating means 124b (step S9), restarts the timer 124a, and makes the travel distance calculating means 124b restart the calculation of a travel distance L (step S10).

Next, the turn signal cancellation control means 124 determines whether or not a second predetermined time T2 has passed since the determination that overtaking is being performed, that is, since the operation of the turn signal switch 104 for giving the instruction to activate the other turn signal 102 (step S11). Specifically, the turn signal cancellation control means 124 determines whether or not the time T as counted by the timer 124a has become equal to or more than the predetermined time T2.

If it is determined in step S11 that the predetermined time T2 has not passed since the operation of the turn signal switch 104 for giving the instruction to activate the other turn signal 102, the turn signal cancellation control means 124 determines whether or not the motorcycle 10 has travelled a second predetermined distance L2 since the determination that overtaking is being performed, that is, since the operation of the turn signal switch 104 for giving the instruction to activate the other turn signal 102 (step S12). Specifically, the turn signal cancellation control means 124 determines whether or not the travel distance L as calculated by the travel distance calculating means 124b has become equal to or larger than the predetermined distance L2.

If it is determined in step S12 that the motorcycle 10 has not travelled the predetermined distance L2 since the determination that overtaking is being performed, the process returns to step S11 to repeat the above-described operation.

If it is determined in step S11 that the predetermined time T2 has passed since the determination that overtaking is being performed, or if it is determined in step S12 that the motorcycle 10 has travelled the predetermined distance L2 since the determination that overtaking is being performed, turn signal cancellation is performed (step S13). That is, the other turn signal 102 is automatically deactivated. The turn signal cancellation is performed because it is considered that the motorcycle 10 has returned to the original lane when the predetermined time T2 has passed or when the motorcycle 10 has travelled the predetermined distance L2 since the operation of the turn signal switch 104 for giving the instruction to activate the other turn signal 102.

Thus, according to the operation shown in FIG. 3, it is determined that overtaking is being performed in a case where the operation for giving the instruction to activate the other of the left turn signal 102L and the right turn signal 102R is performed before the predetermined time T1 has passed or before the motorcycle 10 has travelled the predetermined distance L1 since the operation for giving the instruction to activate one of the left turn signal 102L and the right turn signal 102R is performed when the vehicle speed V is equal to or higher than the predetermined speed V1. The other of the left turn signal 102L and the right turn signal 102R is automatically deactivated after the predetermined time T2 has passed or after the motorcycle 10 has travelled the predetermined distance L2 since the operation for giving the instruction to activate the other turn signal 102. Thus, the predetermined times T1 and T2 and the predetermined distances L1 and L2 can be set appropriately, turn signal cancellation can be performed with appropriate timing during overtaking, and the accuracy of the turn signal cancellation can be improved.

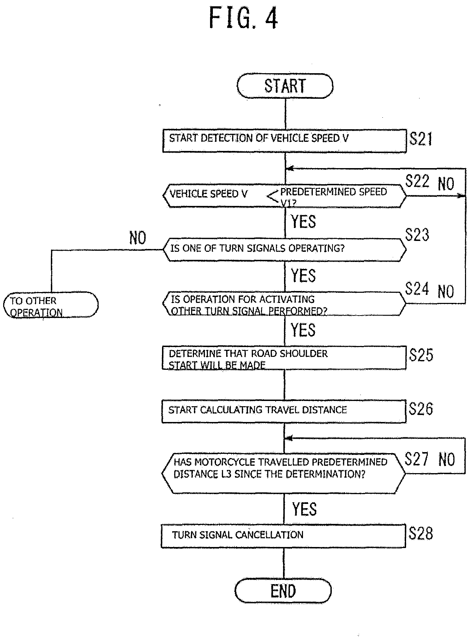

A first turn signal cancelling operation of the turn signal cancelling device 100 which corresponds to a road shoulder start will now be described with reference to the flowchart in FIG. 4.

First, the vehicle speed detecting means 122 detects the vehicle speed V (step S21). A process similar to that of step S1 in FIG. 3 is performed for the detection of the vehicle speed V.

Next, the turn signal cancellation control means 124 determines whether or not a latest detected vehicle speed V is lower than the predetermined speed V1 (step S22). When the vehicle speed V is lower than the predetermined speed V1, then it is determined that the motorcycle 10 is in a stopped state or a state close to a stopped state (a state in which a foot of the driver is in contact with the road surface).

If it is determined in step S22 that the vehicle speed V is not lower than the predetermined speed V1, the turn signal cancellation control means 124 remains in step S22 until the vehicle speed V becomes lower than the predetermined speed V1. If is determined in step S22 that the vehicle speed V is lower than the predetermined speed V1, then the turn signal cancellation control means 124 determines whether or not one of the turn signals 102 is operating (step S23). That is, whether or not one of the left turn signal 102L and the right turn signal 102R is operating is determined.

Next, if it is determined in step S23 that one of the turn signals 102 is operating, the turn signal cancellation control means 124 determines whether or not an operation of the turn signal switch 104 to give an instruction to activate the other turn signal 102 is performed (step S24). Of course, when the operation of the turn signal switch 104 for giving the instruction to activate the other turn signal 102 is performed, the turn signal operating means 120 deactivates the one turn signal 102, and activates the other turn signal 102.

If it is determined in step S24 that the operation of the turn signal switch 104 for giving the instruction to activate the other turn signal 102 is not performed, the process returns to step S22 to repeat the above-described operation.

On the other hand, if it is determined in step S24 that the operation of the turn signal switch 104 for giving the instruction to activate the other turn signal 102 has been performed, it is determined that a road shoulder start will be made (step S25).

In general, on a road in Japan, when the driver stops or parks a motorcycle 10 on a road shoulder, the driver pulls the motorcycle 10 over to the left while making the left turn signal 102L operate, and parks or stops the motorcycle 10 on the road shoulder. When a road shoulder start is made (that is, the driver and motorcycle move off from the road shoulder), the turn signal switch 104 is operated to deactivate the left turn signal 102L and activate the right turn signal 102R, and the start is then made.

Hence, in the present embodiment, it is determined that a road shoulder start is to be made when one of the turn signals 102 is operating and the operation of the turn signal switch 104 for giving the instruction to activate the other turn signal 102 is then performed in a state where the vehicle speed V is lower than the predetermined speed V1 (that is, with the motorcycle 10 in a stopped or substantially stopped state).

On the other hand, if it is determined in step S23 that none of the turn signals 102 is operating (that is, that no turn signal 102 is operating), a transition is made to another operation. When one turn signal 102 is deactivated before the operation of the turn signal switch 104 for giving the instruction to activate the other turn signal 102 is performed, when the vehicle speed V is lower than the predetermined speed V1, it is assumed that parking or the like is being performed, rather than an operation of the turn signal switch 104 due to a road shoulder start. Thus, a transition is made to another operation.

If it is determined in step S25 that a road shoulder start is to be made, the turn signal cancellation control means 124 makes the travel distance calculating means 124b start calculating a travel distance L (step S26).

Next, the turn signal cancellation control means 124 determines whether or not the motorcycle 10 has travelled a third predetermined distance L3 since the determination that a road shoulder start is to be made, that is, since the operation of the turn signal switch 104 for giving the instruction to activate the other turn signal 102 (step S27). Specifically, the turn signal cancellation control means 124 determines whether or not the travel distance L calculated by the travel distance calculating means 124b has become equal to or larger than the predetermined distance L3.

If it is determined in step S27 that the motorcycle 10 has not travelled the predetermined distance L3 since the determination that a road shoulder start is to be made, the process remains in step S27 until it is determined that the motorcycle 10 has travelled the predetermined distance L3.

If it is determined in step S27 that the motorcycle 10 has travelled the predetermined distance L3 since the determination that a road shoulder start will be made, turn signal cancellation is performed (step S28). That is, the other turn signal 102 is automatically deactivated.

Thus, according to the operation shown in FIG. 4, it is determined that a road shoulder start is to be made in a case where the operation for giving the instruction to activate the other of the left turn signal 102L and the right turn signal 102R is performed in a state where the vehicle speed V is lower than the predetermined speed V1 and one of the left turn signal 102L and the right turn signal 102R is operating. The other of the left turn signal 102L and the right turn signal 102R is automatically deactivated after the motorcycle 10 has travelled the predetermined distance L3 since the operation for giving the instruction to activate the other turn signal 102. Thus, the predetermined distance L3 can be set appropriately, turn signal cancellation can be performed at an appropriate time after a road shoulder start, and the accuracy of the turn signal cancellation can be improved.

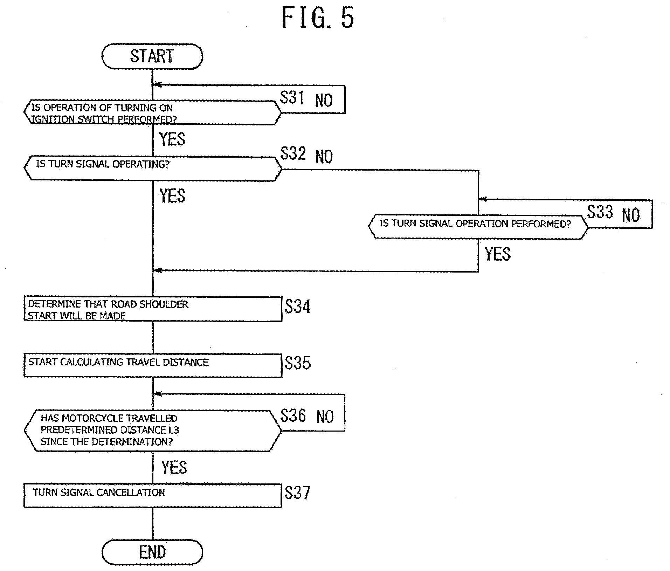

A second turn signal cancelling operation of the turn signal cancelling device 100 which corresponds to a road shoulder start will now be described with reference to the flowchart in FIG. 5.

First, the turn signal cancellation control means 124 determines whether or not an operation of turning on an ignition switch (not shown) of the motorcycle 10 is performed (step S31). The engine 28a can be started by turning on the ignition switch.

If it is determined in step S31 that the operation of turning on the ignition switch has not been performed, the turn signal cancellation control means 124 remains in step S31 until the operation of turning on the ignition switch has been performed.

On the other hand, if it is determined that the operation of turning on the ignition switch has been performed, the turn signal cancellation control means 124 determines whether or not a turn signal 102 is operating (step S32). That is, in step S32, it is determined whether the operation of turning on the ignition switch is performed while a turn signal 102 is operating. The turn signal cancellation control means 124 determines that a turn signal 102 is operating if either one of the left turn signal 102L and the right turn signal 102R is operating.

If it is determined in step S32 that no turn signal 102 is operating, the turn signal cancellation control means 124 determines whether or not an operation of the turn signal switch 104 for giving an instruction to activate a turn signal 102 has been performed (step S33).

If it is determined in step S33 that the operation of the turn signal switch 104 for giving the instruction to activate a turn signal 102 has not been performed, the turn signal cancellation control means 124 remains in step S33 until the operation is performed.

On the other hand, if it is determined that the operation of the turn signal switch 104 for giving the instruction to activate a turn signal 102 has been performed, the turn signal cancellation control means 124 proceeds to step S34, where the turn signal cancellation control means 124 determines that a road shoulder start is to be made. That is, in a case where no turn signal 102 is operating when the operation of turning on the ignition switch is performed, it is determined that a road shoulder start is to be made when the operation of the turn signal switch 104 is performed.

If it is determined in step S32 that a turn signal 102 is operating, then the process proceeds to step S34, where it is determined that a road shoulder start is to be made. That is, in a case where a turn signal 102 is operating when the operation of turning on the ignition switch is performed, it is determined that a road shoulder start is to be made when the operation of turning on the ignition switch is performed.

When the motorcycle 10 parked on a road shoulder is started, the start is made in a state of the ignition switch being on and the right turn signal 102R being operated. Thus, in a case where the ignition switch is turned on and thereafter the turn signal switch 104 is operated, it can be considered that the turn signal switch 104 is operated to make a road shoulder start. Thus, it is determined that a road shoulder start is to be made when the turn signal switch 104 is operated. In addition, in a case where a turn signal 102 is operating when the ignition switch is off, it can be considered that the operation of turning on the ignition switch is performed to make a road shoulder start. Thus, it is determined that a road shoulder start is to be made when the operation of turning on the ignition switch is performed.

When it is determined in step S34 that a road shoulder start is to be made, the turn signal cancellation control means 124 makes the travel distance calculating means 124b start calculating a travel distance L (step S35).

Next, the turn signal cancellation control means 124 determines whether or not the motorcycle 10 has travelled a third predetermined distance L3 since the determination that a road shoulder start is to be made (step S36). Specifically, the turn signal cancellation control means 124 determines whether or not the travel distance L calculated by the travel distance calculating means 124b has become equal to or larger than the predetermined distance L3.

If it is determined in step S36 that the motorcycle 10 has not travelled the predetermined distance L3 since the determination that a road shoulder start is to be made, the process remains in step S36 until it is determined that the motorcycle 10 has travelled the predetermined distance L3.

If it is determined in step S36 that the motorcycle 10 has travelled the predetermined distance L3 since the determination that a road shoulder start is to be made, turn signal cancellation is performed (step S37). That is, the turn signal 102 is automatically deactivated.

Thus, according to the operation shown in FIG. 5, in a case where one of the left turn signal 102L and the right turn signal 102R is already operating when the operation of turning on the ignition switch is performed, it is determined that a road shoulder start is to be made when the operation of turning on the ignition switch is performed. In a case where neither the left turn signal 102L nor the right turn signal 102R is operating when the operation of turning on the ignition switch is performed, it is determined that a road shoulder start is to be made when an operation for giving an instruction to activate one of the left turn signal 102L and the right turn signal 102R is performed. The one of the left turn signal 102L and the right turn signal 102R is automatically deactivated after the motorcycle 10 has travelled the predetermined distance L3 since the determination. Thus, the predetermined distance L3 can be set appropriately, turn signal cancellation can be performed at an appropriate time after a road shoulder start, and the accuracy of the turn signal cancellation can be improved.

Incidentally, in the foregoing embodiment, the turn signal cancellation control means 124 may further automatically deactivate one turn signal 102 that an instruction has been given to activate when the motorcycle 10 has travelled a predetermined distance L4 (for example 120 m) in a state in which the one turn signal 102 is operating since the operation of the turn signal switch 104 for giving the instruction to activate the one turn signal 102 was performed. In this case, when the operation for giving the instruction to activate the one turn signal 102 is performed, the turn signal cancellation control means 124 makes the travel distance calculating means 124b start calculating a travel distance L, and determines whether the motorcycle 10 has travelled the predetermined distance L4 on the basis of the travel distance L calculated by the travel distance calculating means 124b.

In addition, in the foregoing embodiment, the vehicle is a motorcycle 10. However, the vehicle may be a motor-assisted bicycle, a motor tricycle, a four-wheeled motor vehicle, or the like.

Although a preferred embodiment of the present invention has been described above, the scope of the present invention is not limited to that embodiment. It will be apparent to those skilled in the art that various changes or improvements can be made to the above-described embodiment, and it will be apparent from the scope of the claims that modes obtained by adding such changes or improvements are also included in the technical scope of the present invention. Furthermore, symbols in parentheses in the claims are given solely for facilitation of understanding of the present invention, and the present invention should not be interpreted as being limited to elements given the symbols.

## Claims

1. A turn signal cancelling device (100) for a vehicle (10), the turn signal cancelling device (100) comprising:
turn signal cancellation control means (124) for automatically deactivating a turn signal (102); and
vehicle speed detecting means (122) for detecting a vehicle speed; **characterised in that,**
in a case where an operation for giving an instruction to activate an other of a left turn signal (102L) and a right turn signal (102R) is performed before a first predetermined time (T1) has passed or before the vehicle (10) has travelled a first predetermined distance (L1) since an operation for giving an instruction to activate one of the left turn signal (102L) and the right turn signal (102R) was performed when the vehicle speed is equal to or higher than a predetermined speed (V1), the turn signal cancellation control means (124) automatically deactivates the other of the left turn signal (102L) and the right turn signal (102R) after a second predetermined time (T2) has passed or after the vehicle (10) has travelled a second predetermined distance (L2) since the operation for giving the instruction to activate the other of the left turn signal (102L) and the right turn signal (102R), wherein the first predetermined time (T1) is different from the second predetermined time and wherein the first predetermined distance (L1) is different from the second predetermined distance (L2).

2. The turn signal cancelling device (100) for the vehicle (10) according to claim 1,
wherein, in a case where the operation for giving the instruction to activate the other of the left turn signal (102L) and the right turn signal (102R) is performed in a state where the vehicle speed is lower than the predetermined speed (V1) and the one of the left turn signal (102L) and the right turn signal (102R) is operating, the turn signal cancellation control means (124) automatically deactivates the other of the left turn signal (102L) and the right turn signal (102R) after the vehicle (10) has travelled a third predetermined distance (L3) since the operation for giving the instruction to activate the other of the left turn signal (102L) and the right turn signal (102R).

3. The turn signal cancelling device (100) for the vehicle (10) according to claim 1,
wherein, in a case where one of the left turn signal (102L) and the right turn signal (102R) is already operating when an operation of turning on an ignition switch is performed, the turn signal cancellation control means (124) automatically deactivates the one of the left turn signal (102L) and the right turn signal (102R) after the vehicle (10) has travelled a third predetermined distance (L3) since the operation of turning on the ignition switch, and in a case where neither the left turn signal (102L) nor the right turn signal (102R) is operating when the operation of turning on the ignition switch is performed, the turn signal cancellation control means (124) automatically deactivates one of the left turn signal (102L) and the right turn signal (102R) after the vehicle (10) has travelled the third predetermined distance (L3) since the operation for giving the instruction to activate the one of the left turn signal (102L) and the right turn signal (102R).

## Patentansprüche

1. Blinkersignal-Aufhebungsvorrichtung (100) für ein Fahrzeug (10), die Blinkersignal-Aufhebungsvorrichtung (100) umfasst:
eine Blinkersignal-Aufhebungssteuereinrichtung (124) zum automatischen Deaktivieren eines Blinkersignals (102); und
eine Fahrzeuggeschwindigkeits-Erfassungseinrichtung (122) zum Erfassen einer Fahrzeuggeschwindigkeit;
**dadurch gekennzeichnet, dass**
in einem Fall, in dem eine Operation zum Erteilen eines Befehls des Aktivierens eines anderen des anderen des linken Blinkersignals (102L) und des rechten Blinkersignals (102R) durchgeführt wird, bevor eine erste vorbestimmte Zeit (T1) vergangen ist oder bevor das Fahrzeug (10) eine erste vorbestimmte Strecke (L 1) zurückgelegt hat, seit eine Operation zum Erteilen eines Befehls zum Aktivieren eines von den linken Blinkersignalen (102L) und von den rechten Blinkersignalen (102R) durchgeführt wurde, wenn die Fahrzeuggeschwindigkeit gleich oder höher ist als eine vorbestimmte Geschwindigkeit (V1), deaktiviert die Blinksignal-Aufhebungssteuereinrichtung (124) automatisch das andere des linken Blinkersignals (102L) und des rechten Blinkersignals (102R), nachdem eine zweite vorbestimmte Zeit (T2) vergangen ist oder nach dem das Fahrzeug (10) seit der Operation zum Erteilen des Befehls zum Aktivieren des anderen des linken Blinkersignals (102L) und des rechten Blinkersignals (102R) eine zweite vorbestimmte Strecke (L2) zurückgelegt hat, wobei die erste vorbestimmte Zeit (T1) unterschiedlich zu der zweiten vorbestimmten Zeit ist und wobei die erste vorbestimmte Strecke (L 1) unterschiedlich zu der zweiten vorbestimmten Strecke (L2) ist.

2. Blinkersignal-Aufhebungsvorrichtung (100) für das Fahrzeug (10) nach Anspruch 1, wobei in einem Fall, in dem die Operation zum Erteilen des Befehls des Aktivierens des anderen des linken Blinkersignals (102L) und des rechten Blinkersignals (102R) in einem Zustand durchgeführt wird, in dem die Fahrzeuggeschwindigkeit niedriger als die vorbestimmte Geschwindigkeit (V1) ist und das eine des linken Blinkersignals (102L) und des rechten Blinkersignals (102R) arbeitet, wobei die Blinkersignal-Aufhebungssteuereinrichtung (124) automatisch das andere des linken Blinkersignals (102L) und des rechten Blinkersignals (102R) abschaltet, nachdem das Fahrzeugs (10) seit der Operation zum Erteilen des Befehls zum Aktivieren des anderen des linken Blinkersignals (102L) und des rechten Blinkersignals (102R) eine dritte vorbestimmten Strecke (L3) zurückgelegt hat.

3. Blinkersignal-Aufhebungsvorrichtung (100) für das Fahrzeug (10) nach Anspruch 1, wobei in einem Fall, in dem eines der linken Blinkersignale (102L) und der rechten Blinkersignale (102R) bereits arbeitet, wenn eine Operation des Einschaltens eines Zündschalters ausgeführt wird, wird die Blinkersignal-Aufhebungssteuereinrichtung (124) automatisch das eine des linken Blinkersignals (102L) und des rechten Blinkers (102R) deaktiviert, nachdem das Fahrzeug (10) seit der Operation des Einschaltens des Zündschalters eine dritte vorbestimmten Strecke (L3) zurückgelegt hat, und in einem Fall, in dem weder das linke Blinkersignale (102L) noch das rechte Blinkersignale (102R) arbeitet, wenn die Operation des Einschalten des Zündschalters ausgeführt wird, wobei die Blinksignal-Aufhebungssteuereinrichtung (124) automatisch das linke Blinkersignale (102L) und das rechte Blinkersignale (102R) deaktiviert, nachdem das Fahrzeug (10) seit der Operation zum Erteilen des Befehls zum Aktivieren des linken Blinkersignals (102L) und des rechten Blinkersignals (102R) die dritte vorbestimmte Strecke (L3) zurückgelegt hat.

## Revendications

1. Dispositif d'annulation d'un feu de changement de direction (100) pour un véhicule (10), le dispositif d'annulation d'un feu de changement de direction (100) comprenant :
un moyen de commande de l'annulation d'un feu de changement de direction (124) pour désactiver de manière automatique un feu de changement de direction (102) ; et
un moyen de détection de la vitesse d'un véhicule (122) pour détecter la vitesse d'un véhicule ;
**caractérisé en ce que**, dans un cas dans lequel une opération pour donner une instruction destinée à activer que ce soit un feu de changement de direction vers la gauche (102L) ou un feu de changement de direction vers la droite (102R) est mise en oeuvre avant le déroulement d'un premier laps de temps prédéterminé (T1) ou avant le parcours par le véhicule (10) d'une première distance prédéterminée (L1) depuis qu'une opération pour donner une instruction destinée à activer que ce soit le feu de changement de direction vers la gauche (102L) ou le feu de changement de direction vers la droite (102R) a été mise en oeuvre lorsque la vitesse du véhicule est égale ou supérieure à une vitesse prédéterminée (V1), le moyen de commande de l'annulation d'un feu de changement de direction (124) désactive de manière automatique que ce soit le feu de changement de direction vers la gauche (102L) ou le feu de changement de direction vers la droite (102R) après le déroulement d'un second laps de temps prédéterminé (T2) ou après le parcours par le véhicule (10) d'une deuxième distance prédéterminée (L2) depuis l'opération pour donner l'instruction destinée à activer que ce soit le feu de changement de direction vers la gauche (102L) ou le feu de changement de direction vers la droite (102R), dans lequel le premier laps de temps prédéterminé (T1) est différent du second laps de temps prédéterminé et dans lequel la première distance prédéterminée (L1) est différente de la deuxième distance prédéterminée (L2).

2. Dispositif d'annulation d'un feu de changement de direction (100) pour le véhicule (10) selon la revendication 1, dans lequel dans un cas dans lequel l'opération pour donner l'instruction destinée à activer que ce soit le feu de changement de direction vers la gauche (102L) ou le feu de changement de direction vers la droite (102R) est mise en oeuvre dans un état dans lequel la vitesse du véhicule est inférieure à la vitesse prédéterminée (V1) et que ce soit le feu de changement de direction vers la gauche (102L) ou le feu de changement de direction vers la droite (102R) est en état de marche, le moyen de commande de l'annulation d'un feu de changement de direction (124) désactive de manière automatique que ce soit le feu de changement de direction vers la gauche (102L) ou le feu de changement de direction vers la droite (102R) après le parcours par le véhicule (10) d'une troisième distance prédéterminée (L3) depuis l'opération pour donner l'instruction destinée à activer que ce soit le feu de changement de direction vers la gauche (102L) ou le feu de changement de direction vers la droite (102R).

3. Dispositif d'annulation d'un feu de changement de direction (100) pour le véhicule (10) selon la revendication 1, dans lequel dans un cas dans lequel que ce soit le feu de changement de direction vers la gauche (102L) ou le feu de changement de direction vers la droite (102R) est déjà en état de marche lorsqu'une opération de mise en marche d'un commutateur d'allumage est mise en oeuvre, le moyen de commande de l'annulation d'un feu de changement de direction (124) désactive de manière automatique que ce soit le feu de changement de direction vers la gauche (102L) ou le feu de changement de direction vers la droite (102R) après le parcours par le véhicule (10) d'une troisième distance prédéterminée (L3) depuis l'opération de mise en marche du commutateur d'allumage, et dans un cas dans lequel ni le feu de changement de direction vers la gauche (102L), ni le feu de changement de direction vers la droite (102R) n'est en état de marche lorsque l'opération de mise en marche d'un commutateur d'allumage est mise en oeuvre, le moyen de commande de l'annulation d'un feu de changement de direction (124) désactive de manière automatique que ce soit le feu de changement de direction vers la gauche (102L) ou le feu de changement de direction vers la droite (102R) après le parcours par le véhicule (10) de la troisième distance prédéterminée (L3) depuis l'opération pour donner l'instruction destinée à activer que ce soit le feu de changement de direction vers la gauche (102L) ou le feu de changement de direction vers la droite (102R).
